# EUROPEAN PATENT SPECIFICATION

(11) **EP 3 646 083 B1**
(45) Date of publication and mention of the grant of the patent: **30.04.2025**
(21) Application number: 18738180.1
(22) Date of filing: 28.06.2018
(51) Int. Cl.: G02B 6/38, G02B 6/44

(54) **FIBER OPTIC EXTENDER PORTS, ASSEMBLIES AND METHODS OF MAKING THE SAME**
FASEROPTISCHE VERLÄNGERUNGSANSCHLÜSSE, ANORDNUNGEN UND VERFAHREN ZUR HERSTELLUNG DERSELBEN
PORTS D'EXTENSION DE FIBRE OPTIQUE, ENSEMBLES ET PROCÉDÉS DE FABRICATION ASSOCIÉS

(30) Priority: 28.06.2017 US 201762526195 P; 30.11.2017 WO PCT/US2017/064092; 30.11.2017 WO PCT/US2017/064095; 26.06.2018 US 201816019008; 26.06.2018 US 201816018918; 26.06.2018 US 201816018988; 26.06.2018 WO PCT/US2018/039484; 26.06.2018 WO PCT/US2018/039485; 26.06.2018 WO PCT/US2018/039494
(43) Date of publication of application: 06.05.2020
(73) Proprietor: Corning Research & Development Corporation, Corning, New York 14831 (US)
(72) Inventor: DANNOUX, Thierry Luc Alain, 77210 Avon (FR); SCOTTA, Felice, 77176 Savigny-le-Temple (FR); WIMMER, Michael, 12524 Berlin (DE); WOODY, Shane, Mooresville NC 28117 (US)
(74) Representative: Sturm, Christoph
(86) International application number: PCT/US2018/040011
(87) International publication number: WO 2019/006121

(56) References cited:
- WO-A1-2014/151259
- WO-A1-2015/144883
- US-A1- 2006 153 503
- US-A1- 2014 016 902

## Description

### CROSS-REFERENCE TO RELATED APPLICATIONS

This application claims the benefit of U.S. Application Nos. 62/526,195, filed on June 28, 2017;16/018,918 filed on June 26, 2018; 16/018,988 filed on June 26, 2018; and U.S. Application Serial No. 16/019,008 filed June 26, 2018.

This applications also claims the benefit of priority under 35 USC §365 of International Patent Application Serial Nos. PCT/US2017/064092 filed on November 30, 2017; PCT/US2017/064095 filed on November 30, 2017; PCT/US2018/039484 filed on June 26, 2018; PCT/US2018/039485 filed on June 26, 2018; and PCT/US2018/039494 filed on June 26, 2018; all designating the United States of America.

### FIELD

The disclosure is directed to fiber optic devices providing at least one optical connection port along with methods for making the same. More specifically, the disclosure is directed to fiber optic extender ports comprising one or more connection ports and a securing feature associated with the connection port for securing an optical connector along with methods of making the same.

### BACKGROUND

Optical fiber is increasingly being used for a variety of applications, including but not limited to broadband voice, video, and data transmission. As bandwidth demands increase optical fiber is migrating deeper into communication networks such as in fiber to the premises applications such as FTTx, 5G and the like. As optical fiber extended deeper into communication networks the need for making robust optical connections in outdoor applications in a quick and easy manner was apparent. To address this need for
making quick, reliable, and robust optical connections in communication networks hardened fiber optic connectors such as the OptiTap^{®} plug connector were developed.

Multiports were also developed for making an optical connection with hardened connectors. Prior art multiports have a plurality of receptacles mounted through a wall of the housing for protecting an indoor connector inside the housing that makes an optical connection to the external hardened connector of the branch or drop cable.

The different branch or drop cables may require different lengths to reach the desired connection location. With factory-terminated solutions there are typically several lengths of drop cables that are offered and the user can use the length of connectorized drop cable that best fits the link length required. However, this can require the craft to stock several different length drop cables and lots of slack storage of cable if the lengths are not well-matched to the link length required.

Consequently, there exists an unresolved need for devices that allow flexibility for the network operators to quickly and easily make optical connections to extend the reach of an optical network while also addressing concerns related to limited space, organization, or aesthetics.

US 2006/153503 A1 discloses an adapter with a push-push coupling mechanism having flipper that cooperates with a dual pin on the connector. The push-push mechanism comprises triple prong spring clip, flipper and nest which serves as the vertical axis that the flipper pivots. flipper cooperates with dual pin disposed on connector during insertion and withdrawal for actuating the push-push mechanism.

WO 2015/144883 A1 discloses a hybrid connector 820 for use with hybrid adapter 836. The hybrid adapter requires an adapter housing defined by an outer part and inner part.

WO 2014/151259 A1 and US 2014/016902 A1 disclose other prior art.

### SUMMARY

The disclosure is directed to extender ports comprising at least one connection port and a securing feature associated with the connection port. Methods of making the devices are also disclosed. The devices can have any suitable construction such as disclosed herein such a connection port that is keyed for inhibiting a non-compliant connector from being inserted and potentially causing damage to the device.

The invention provides an extender port according to claim 1, as well as a method of making an extender port according to claim 11.

Additional features and advantages will be set forth in the detailed description which follows, and in part will be readily apparent to those skilled in the art from that description or recognized by practicing the same as described herein, including the detailed description that follows, the claims, as well as the appended drawings.

It is to be understood that both the foregoing general description and the following detailed description present embodiments that are intended to provide an overview or framework for understanding the nature and character of the claims. The accompanying drawings are included to provide a further understanding of the disclosure, and are incorporated into and constitute a part of this specification. The drawings illustrate various embodiments and together with the description serve to explain the principles and operation.

### BRIEF DESCRIPTION OF THE FIGURES

**FIG. 1** is an exploded view of an explanatory fiber optic extender port according to the concepts disclosed for mating one or more external fiber optic connectors to the fiber optic extender port;
**FIG. 2** is a perspective view of the fiber optic extender port of **FIG. 1** with fiber optic connectors inserted and secured in the connection ports of the fiber optic extender port;
**FIG. 2A** is a perspective view of another fiber optic extender port similar to **FIG. 1** with a single fiber optic connector inserted and secured in the connection port for making an optical connection with a tether cable that is fixed to the fiber optic extender port;
**FIG. 3** depicts a partially exploded bottom view of the fiber optic extender port of **FIG. 1** with the bottom shell excluded;
**FIG 4****.** depicts a bottom perspective assembly view of the fiber optic extender port of **FIG. 3** with the bottom shell removed;
**FIG. 5** is a cross-sectional view of the fiber optic extender port of **FIG. 1** with no fiber optic connectors attached;
**FIG. 6** is a perspective view of the bottom shell of the fiber optic extender port of **FIG. 1** showing the internal features;
**FIG. 7** is a detailed partial cross-sectional view of the fiber optic extender port of **FIG. 1** with a fiber optic connector inserted into a connection port;
**FIG. 8** is a cross-sectional view of the fiber optic extender port of **FIG. 1** showing a first fiber optic connector mated with a second fiber optic connector that are inserted and secured in respective connection ports;
**FIG. 9** is a detailed cross-sectional view of the fiber optic extender port of **FIG. 8****;**
**FIGS. 10-12** are various perspective views of a securing features of the fiber optic extender port of **FIG. 1****;**
**FIG. 13** is an exploded view of another explanatory fiber optic extender port using a single securing feature having two locking features according to the concepts disclosed for mating fiber optic connectors;
**FIG. 14** depicts a partially exploded bottom view of the fiber optic extender port of **FIG. 13****;**
**FIG 15** depicts a bottom perspective assembly view of the fiber optic extender port of **FIG. 14** with the bottom shell removed;
**FIG. 16** is a top perspective assembly view of the fiber optic extender port of **FIG. 13** with the top shell removed;
**FIG. 17** is a perspective assembled view of the fiber optic extender port of **FIG. 13** with fiber optic connectors inserted and secured in the respective connection ports and optically mated together;
**FIG. 18** is a perspective view of yet another fiber optic extender port not covered by the scope of the appended set of claims;
**FIG. 19** is a top perspective assembly view of the fiber optic extender port of **FIG. 18** with the top shell removed;
**FIGS. 20** is a perspective view of the securing feature installed in the fiber optic extender port of **FIG. 18 and 19** with a fiber optic connector attached with the adapter assembly and top shell removed for explanation purposes;
**FIG. 21** is a perspective view of the fiber optic extender port of **FIG. 18 and 19** with housing portions removed from the securing feature on the left-side showing the securing member engaging the fiber optic connector;
**FIGS. 22** is a top view of fiber optic extender port of **FIG. 18 and 19** with the top shell removed and fiber optic connectors secured and mated within the adapter assembly;
**FIG. 23** is a side view of the fiber optic extender port of **FIG. 18 and 19** with housing portions removed from the securing features on both sides for showing the securing member engaging the fiber optic connector;
**FIG. 24** is a detailed perspective view of the fiber optic extender port with one of the housing portions disposed about the securing feature and one housing portion removed for showing alignment of the housing and the securing member in the fiber optic extender port;
**FIGS. 25-27** are various perspective views of the securing feature of the fiber optic extender port of **FIG. 18****;**
**FIG. 28** is a perspective view of an explanatory securing member blank for forming the securing member of the securing feature for the fiber optic extender port of **FIGS. 18-24****;**
**FIG. 29** is a perspective view showing the securing member formed from the securing member blank of **FIG. 28** showing details of the same;
**FIGS. 30 and 31** are views of another multi-component securing feature not covered by the scope of the appended set of claims for use with fiber optic extender ports;
**FIG. 32** is a front views of another multi-component securing feature not covered by the scope of the appended set of claims for use with fiber optic extender ports;
**FIGS. 33 and 34** respectively depict perspective views of an organizer for holding a plurality of fiber optic extender ports in an array and the organizer with the fiber optic extender ports installed;
**FIGS. 35 and 36** respectively depict perspective views of another organizer for holding a plurality of fiber optic extender ports in an array and the organizer with the fiber optic extender ports installed; and
**FIGS. 37 and 38** respectively depict perspective views of yet another organizer for holding a plurality of fiber optic extender ports in an array and the organizer with the fiber optic extender ports installed.

### DETAILED DESCRIPTION

Reference will now be made in detail to the embodiments of the disclosure, examples of which are illustrated in the accompanying drawings. Whenever possible, like reference numbers will be used to refer to like components or parts.

The concepts for the devices disclosed herein are suitable for providing at least one optical connection for indoor, outdoor or other environments as desired. Generally speaking, the devices disclosed and explained in the exemplary embodiments are extender ports, but the concepts disclosed may be used with any suitable device as appropriate. As used herein, the term "extender port" means any device comprising a first connection port for receiving a fiber optic connector and making an optical connection. In one embodiment, the extender port has a first connection port and a second connection port that are aligned for making an optical connection between two external fiber optic connectors. Thus, the extender port may be used to customize or extend the length of an optical link by using two cables connected by the extender port,
thereby providing further flexibility to the network provider. In other embodiments, the extender port can be fixed to a tether cable for optical connection with an external connector. The connection port also has a securing feature associated with the at least one connection port for securing and releasing the fiber optic connector. By way of example, the extender port may further include other components such as active components such as a wireless sub-assembly device having electronics for transmitting or receiving a signal disposed within the shell of the extender port.

The concepts disclosed advantageously allow compact form-factors for the extender ports and may also optionally include at least one connection port comprising a keying portion for aligning the fiber optic connector with the securing feature associated with the connection port. Although, extender ports are shown and described for a single inline connection, the concepts are scalable to many in-line connection ports on a single device in a variety of arrangements or constructions. The securing features disclosed herein for devices engage directly with a portion of connector without conventional structures like prior art devices that require the turning of a coupling nut, bayonet or the like. As used herein, "securing feature" excludes threads and features that cooperate with bayonets on a connector. Thus, the devices disclosed may allow connection port to be closely spaced and may result in small devices since the room and structure needed for turning a threaded coupling nut or bayonet is not necessary. The compact form-factors may allow the placement of the devices in tight spaces in indoor, outdoor, buried, aerial, industrial or other applications while advantageously providing a device having at least one connection port with a robust and reliable optical connection in a removable and replaceable manner. The disclosed devices may also be aesthetically pleasing. Organizers may also be used with the extender ports for providing organization for an array of extender ports having optical connections.

The devices disclosed are simple and elegant in their designs. The devices disclosed comprise at least one connection port and a securing feature associated with the connection port that is suitable for retaining an external fiber optic connector received by the connection port. A keying portion of the connection port may cooperates with a key on a complimentary external fiber optic connector to inhibit damage to the connection port by inhibiting the insertion of a non-compliant connector while also ensuring the correct rotational alignment to secure the fiber optic connector. The keying portion may also aid the user during blind insertion of the connector into the connection port of the device to determine the correct rotational orientation with respect to the connection port when a line of sight is not possible or practical for alignment. The keying portion may be an additive keying portion to the primitive geometric round shape of the connection port passageway 233 such as a male key. However, the concepts for the connection ports 236 of devices may be modified for different connector designs without a keying portion as well.

The concepts disclosed advantageously allow the quick and easy connection and retention by inserting the fiber optic connectors directly into the connection port of the device without the need or space considerations for turning a threaded coupling nut or bayonet for retaining the external fiber optic connector. Generally speaking, the securing features disclosed for use with extender ports herein may comprise one or more components with at least one component translating for releasing or securing the external fiber optic connector to the device. Specifically, the securing feature is capable of translating within the shell. As used herein, the term "securing feature" excludes threaded portions or features for securing a bayonet disposed on a connector.

Since the connector footprint used with the devices disclosed does not require the bulkiness of a coupling nut or bayonet, the fiber optic connectors used with the devices disclosed herein may also be significantly smaller than conventional fiber optic connectors.

The devices disclosed comprise a securing feature for directly engaging with a suitable portion of a connector housing of the external fiber optic connector or the like for securing an optical connection with the device. Different variations of the concepts are discussed in further detail below. The structure for securing the fiber optic connectors in the devices disclosed allows much smaller footprints for both the devices and the fiber optic connectors along with a quick-connect feature. Although shown as simplex devices, the device may also have a dense spacing of connection ports within a shell such as a duplex designs or beyond if desired. The concepts disclosed advantageously allow a scalable and relatively dense and organized array of connection ports in a relatively small form-factor while still being rugged for demanding environments.

The concepts disclosed herein are suitable for optical distribution networks such as for Fiber-to-the-Home or 5G applications, but are equally applicable to other optical applications as well including indoor, automotive, industrial, wireless, or other suitable applications. Additionally, the concepts disclosed may be used with any suitable fiber optic connector footprint that cooperates with the securing feature of the device. Various designs, constructions, or features for devices are disclosed in more detail as discussed herein and may be modified or varied as desired.

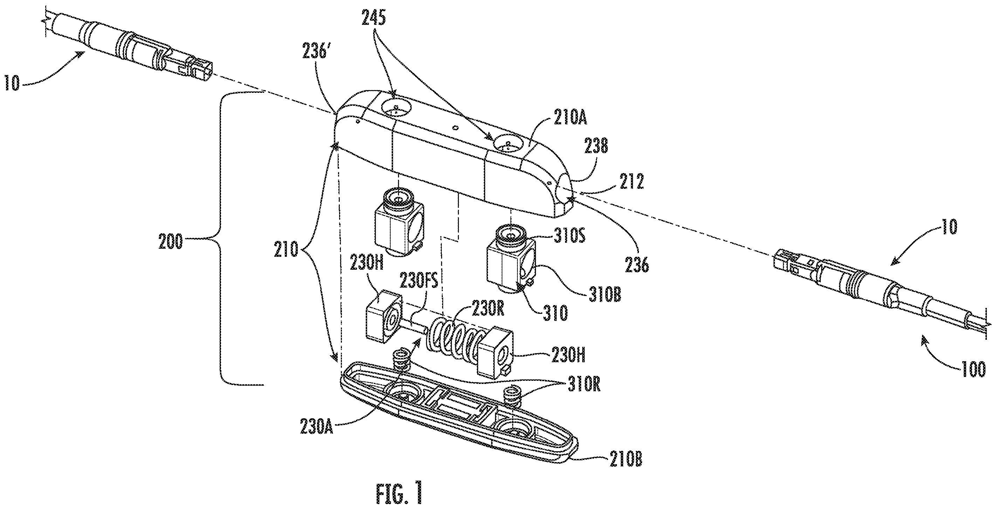

**FIG. 1** is an exploded view of explanatory extender port 200 comprising at least one connection port 236 for making optical connections. Generally speaking, extender port 200 comprises at least one connection port 236 being a portion of a shell 210 of the device. By way of explanation, at least one connection ports 236 is molded as a portion of shell 210.

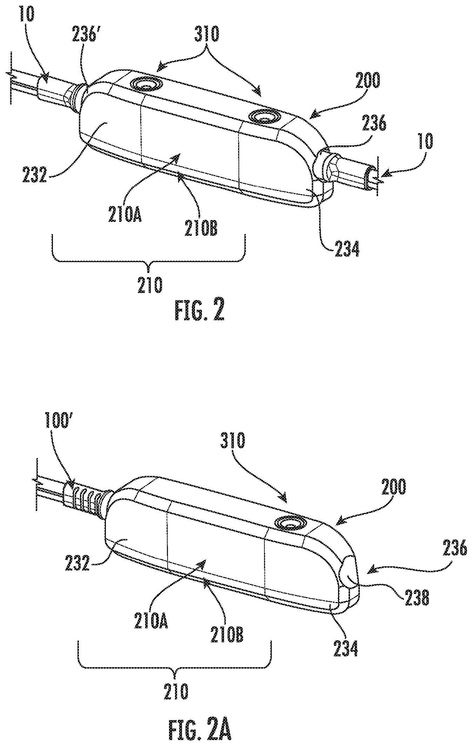

Generally speaking, extender port 200 comprises a shell 210 comprising a body 232 and one or more connection ports 236 disposed on a first end or portion 212 of extender port 200. The connection ports 236 are configured for receiving and retaining external fiber optic connectors 10 such as shown in **FIG. 2** for making one or more optical connections within the extender port 200. In the embodiment of FIG. 1, fiber optic connectors 10 are received from each end of the extender port 200 for making an optical connection between the fiber optic connectors 10 within the device. Although, single-fiber connectors 10 are shown, the concepts may be used with multi-fiber connectors as well.

Extender port 200 of **FIG. 1** comprises a first connection port 236 and a second connection port 236' that are inline or aligned for making an optical connection between fiber optic connectors 10 that are inserted from respective ends of the extender port 200. In other embodiments, the extender port may have a fixed cable 100 on one end and a single connector port 236 for making an optical connection with optical fibers of the fixed cable such as shown in **FIG. 2A****.**

Connection ports 236 each comprise a respective optical connector opening 238 extending from an outer surface 234 of the extender port 200 into a cavity 216 of the extender port 200 and defining a connection port passageway 233. At least one securing feature 310 is associated with the connection port passageway 233 for cooperating with the external fiber optic connector 10. The securing feature may translate for releasing or securing the external fiber optic connector 10. One or more respective securing feature passageways 245 such as shown in **FIG. 1** extend from the outer surface 234 of extender port 200 and cooperate with the respective connection port passageways 233 of the extender port 200. Respective securing features 310 are associated with the connection port passageways 233 and may have a portion of the securing feature 310 disposed within a portion of the securing feature passageway 245 of the extender port 200.

Optical connections to the extender ports 200 are made by inserting one or more suitable external fiber optic connectors 10 into respective connection port passageways 233 as desired. Specifically, the connection port passageway 233 is configured for receiving a suitable external fiber optic connector 10 (hereinafter connector) of a fiber optic cable assembly 100 (hereinafter cable assembly). Each connection port passageway 233 is associated with a securing feature 310 for retaining (e.g., securing) connector 10 in the extender port 200. The securing feature 310 advantageously allows the user to make a quick and easy optical connection at the connection port 236 of extender ports 200 by pushing the connector 10 into the port until it is secured. The securing feature 310 may operate for providing a connector release feature when actuated such as by pushing downward.

Specifically, the connector 10 may be retained within the respective connection port 236 of the device by pushing and fully-seating the connector 10 within the connection port 236 as shown in **FIG. 2****.** To release the connector 10 from the respective connection port 236, the securing feature 310 is actuated by pushing downward to translate the securing feature 310 a suitable distance, thereby releasing the securing feature from the connector housing and allowing the connector to be removed from the connection port 236. Stated another way, the at least one securing feature 310 is capable of releasing the connector 10 when translating within a portion of a securing feature passageway 245. The full insertion and automatic retention of the connector 10 may advantageously allow one-handed installation of the connector 10 by merely pushing the connector into the connection port 236. The extender ports 200 disclosed accomplish this connector retention feature upon full-insertion by biasing the securing feature to a retain position. However, other modes of operation for retaining and releasing the connector 10 are possible according to the concepts disclosed. For instance, the securing feature 310 may be designed to require actuation for inserting the connector 10; however, this may require a two-handed operation.

Securing feature 310 may be designed for holding a minimum pull-out force for connector 10. In some embodiments, the pull-out force may be selected to release the connector 10 before damage is done to the device or the connector 10. By way of example, the securing feature 310 associated with the connection port 236 may require a pull-out force of about 50 pounds (about 220N) before the connector 10 would release. Likewise, the securing feature 310 may provide a side pull-out force for connector 10 for inhibiting damage as well. By way of example, the securing feature 310 associated with the connection port 236 may provide a side pull-out force of about 25 pounds (about 110N) before the connector 10 would release. Of course, other pull-out forces such as 75 pounds (about 330N) or 100 (about 440N) pounds are possible along with other side pull-out forces.

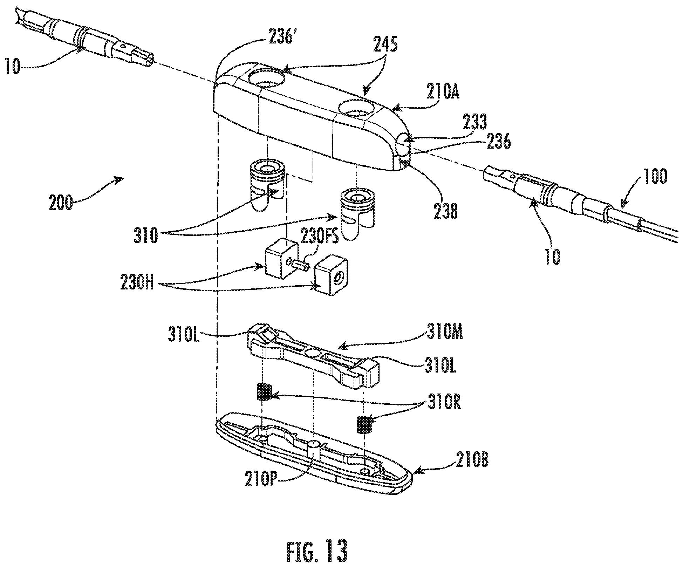

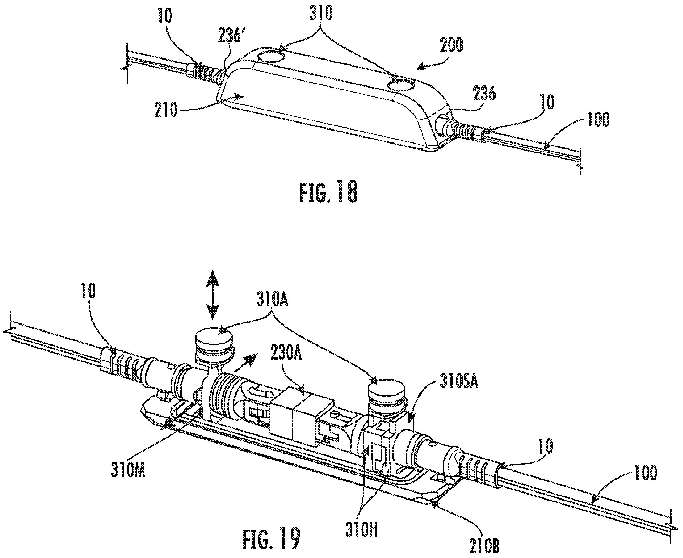

The securing features 310 disclosed herein may take many different constructions or configurations. By way of explanation, securing features 310 may be formed from a single component as shown in **FIG. 1** or a plurality of components as shown in **FIG. 19****.** Furthermore, the securing features 310 or portions of securing features 310 may be constructed as sub-assemblies such as shown in **FIG. 19** for easy assembly. Still other variations are possible. **FIG. 13** depicts a single securing feature 310M having opposing locking features that cooperates with mating connection ports 236.

Generally speaking, the extender ports 200 comprise at least one connection port 236 defined by an optical connector opening 238 extending into a cavity 216 of the extender port 200 along with a securing feature 310 associated with the connection port 236.

More specifically, **FIG. 1** is an exploded view of extender port 200 comprising at least one connection port 236 disposed on the extender port 200 with the connection port 236 defined by an optical connector opening 238 extending from an outer surface 234 of the extender port 200 into a cavity 216 of the extender port 200 and defining a connection port passageway 233. Extender port also comprises at least one securing feature passageway 245 for receiving at least a portion of the securing feature 310. Securing features 310 are biased to a retain position using respective resilient members 310R. The securing feature passageways 245 extend from the outer surface 234 of extender port 200. This extender port 200 comprises a shell 210 having a first portion 210A and a second portion 210B along with an adapter assembly 230A.

**FIG. 1** depicts connectors 10 aligned at opposite ends of the extender port 200 for insertion into respective connection ports 236 and **FIG. 2** depicts a plurality of connectors 10 retained within respective connection ports 236 of the assembled extender port 200. As shown in **FIG. 2A****,** extender ports 200 may have a fixed tether cable 100 attached at one end and a mating optical connection port 236 for receiving connector 10 at the other end according to the concepts disclosed.

By way of explanation, the one or more connection ports 236 and the one or more securing feature passageways 245 are a portion of the shell 210. Illustratively, **FIGS. 1** **and** **2** depict extender port 200 comprising a shell 210 comprising a body 232 with a first connection ports 236disposed on a first end or portion 212 and a second connection port 236' disposed on an opposite end. Each connection port 236,236' comprises a respective optical connector opening 238. The optical connector openings extend from an outer surface 234 of shell 210 of the extender port 200 into a cavity 216 and define a respective connection port passageway 233,233'. One or more respective securing feature passsageways 245 extend from the outer surface 234 of the shell 210 to cooperate with the respective connection port passageways 233, 233'. The second connection port passageway (233') is aligned with the first connection port passageway (233) so that respective external connectors 10 may be optical mated using the extender port 200. As depicted in **FIG. 1****,** shell 210 is formed by a first portion 210A and a second portion 210B, but other arrangements are possible for shell 210.

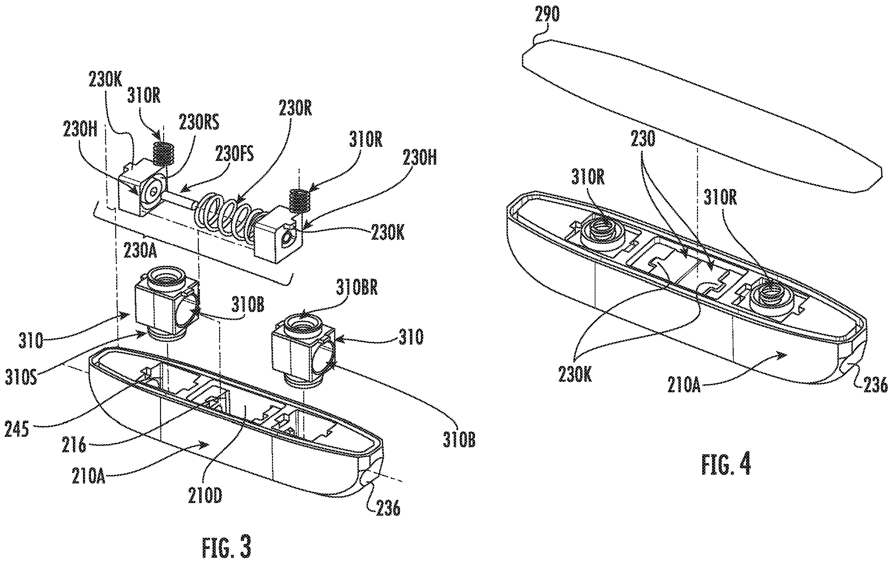

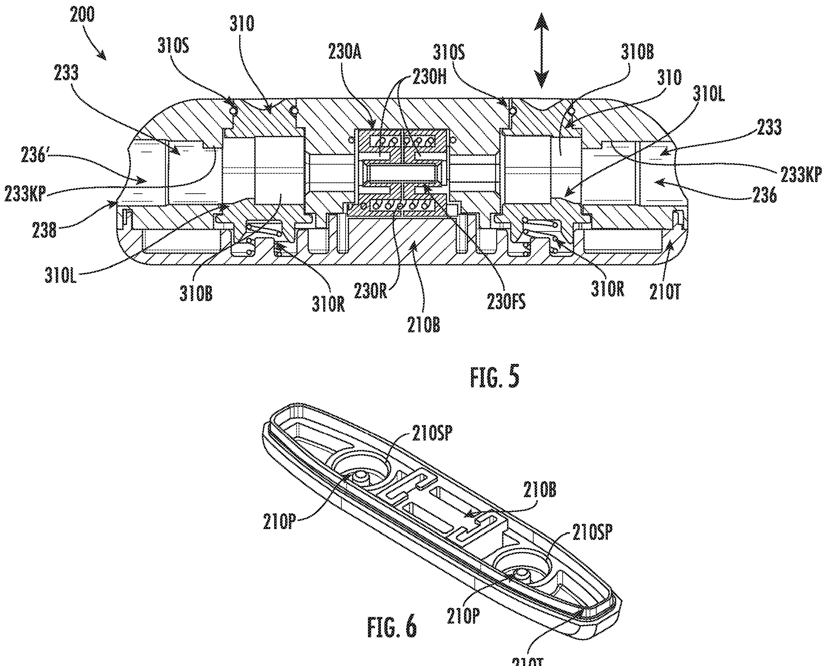

**FIG. 3** is an exploded view showing the second portion 210B of shell 210 removed from the first portion 210A and showing the internal assembly of extender port 200. **FIGS. 3 and 4** show the assembly of the extender port 200 of **FIG. 1****.** **FIG. 5** shows a longitudinal cross-section through the connection port passageway 233 of an assembled extender port 200 with no connectors attached.

As shown in **FIG. 5****,** securing feature 310 is biased to a retain position. Specifically, the securing feature 310 is biased in an upward direction using a securing feature resilient member 310R that is positioned between the securing feature 310 and shell 210. Consequently, a portion of securing feature 310 is capable of translating within a portion of the securing feature passageway 245. As depicted, a sealing feature 310S is disposed on the securing feature 310. Sealing feature 310S provides a seal between the securing feature 310 and the securing feature passageway 245 to inhibit dirt, dust and debris from entering the device.

As best depicted in **FIG. 5****,** this connection port passageway 233 may comprise a keying portion 233KP as part of the extender port 200. As shown, keying portion 233KP is disposed forward of the securing feature 310 (i.e., before) in the connection port passageway 233 upon entry of the passageway. The keying portion 233KP may have any suitable location in the connection port passageway 233 forward of the securing feature. As depicted, the extender port 200 has the securing features 310 associated with each connection port passageway 233 that cooperate with a portion of the securing feature passageway 245. In this embodiment, the securing feature 310 is a pushbutton actuator formed as a single component with the locking feature 310L.

Extender port may also have a keying portion 233KP disposed on the optical connector opening 238 side of the securing feature 310. Keying portion 233KP inhibits the insertion of a non-compliant connector into connection port 236, thereby inhibiting damage that may be caused to the device. Suitable connectors 10 have a complimentary keying feature that cooperates with the keying portion 233KP of extender port 200. Keying portion 233KP may be a protrusion or additive feature disposed within the connection port passageway 233 on the optical connector opening 238 side of the securing feature 310 and may take several different configuration if used. For instance, keying portion 233KP may be a simple protrusion as shown. In other embodiments, the keying portion 233KP may take the shape of a D-shaped opening to allow only a suitable connector 10 having a complimentary feature to be inserted into the connection port 236. The keying portion 233KP may also aid with blind mating a connector 10 into the connection port 236 since it only allows further insertion into the connection port 236 when the connector is in the proper rotational orientation.

Extender port 200 of **FIG. 1** also comprises at least one adapter assembly 230A aligned with one or more of the respective connection ports 236 when assembled. Adapter assembly 230A is suitable for aligning the respective ferrules of connectors 10 that are inserted into connection ports 236. Adapter assembly 230A may comprise a ferrule sleeve 230FS, an adapter housing formed from one or more components 230H, and a resilient member 230R as shown in **FIGS. 1** **and** **3****.** Ferrule sleeve 230FS receives a portion of the respective ferrule 10F of connectors 10 for precision alignment.

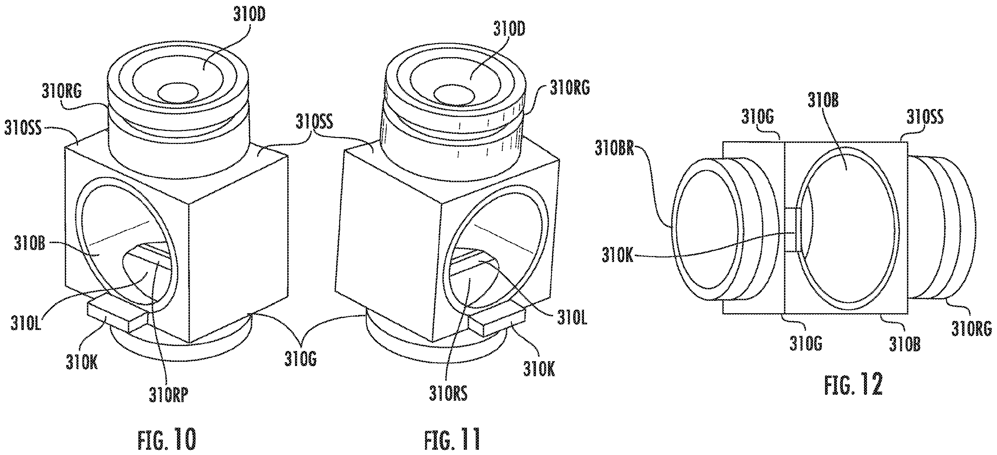

**FIGS. 3 and 4** depict the assembly of extender port 200 of **FIG. 1****.** **FIG. 3** depicts the securing feature 310 being aligned for installation into the securing feature passageway 245 of the first portion 210A of shell 210. As depicted, keying features 310K of securing feature 310 **(****FIGS. 10-12****)** are aligned with the features of the securing feature passageway 245, which only allow assembly in one orientation for the correct orientation of the locking feature 310L in the extender port 200. **FIG. 3** also shows adapter 230A in an exploded view before being aligned and installed into the saddle 210D of first portion 210A of shell 210. Once seated, the resilient member 230R of adapter 230A biases the housing 210H components outward and provides the ability for the ferrule sleeve 230FS or adapter 230A to "float" relative to the shell 210. "Float" means that the adapter 230A can have slight movement in the X-Y plane for alignment, and may be inhibited from over-traveling in the Z-direction along the axis of connector insertion so that suitable alignment may be made between mating connectors. Once the adapter 230A is installed into first portion 210A, the biasing force on housing components 230H holds the adapter 230A in place until the second portion 210B of shell 210 is attached as depicted in **FIG. 5****.**

In other embodiments, adapters 230A may be formed from several components, but some adapters or portions thereof could be integrally formed with the extender port as well.

**FIG. 4** depicts is a partial assembled view of extender port 200 showing adapter 230A installed into the first portion 210A of the shell 210, and the respective securing feature resilient members 310R placed on a bottom portion of securing feature 310 before the second portion 210B of shell 210 is attached to trap the securing feature resilient members 310R in place. Securing feature 310 may have a bottom recess 310BR or ring for seating the securing feature resilient members 310R and centering the restoring force on the securing feature 310 as best shown in **FIG. 5****.** Thereafter, the second portion 210B of shell 210 may be attached to the first portion 210A is a suitable fashion using a sealing element 290 or not.

In this embodiment, the securing feature 310 comprises a bore 310B that is aligned with the least one connection port passageway 233 when assembled as best shown in **FIG. 5****.** Bore 310B is sized for receiving a suitable connector 10 therethrough for securing the same for optical connectivity. Bores or openings through the securing feature 310 may have any suitable shape or geometry for cooperating with its respective connector. As used herein, the bore may have any suitable shape desired including features on the surface of the bore for engaging with a connector for securing the same.

In some embodiments, the securing feature 310 is capable of moving to an open position when inserting a suitable connector 10 into the connection port passageway 233. When the connector 10 is fully-inserted into the connector port passageway 233, the securing feature 310 is capable of moving to the retain position automatically. Consequently, the connector 10 is secured within the connection port 236 by securing feature 310 without turning a coupling nut or a bayonet like the prior art devices. Stated another way, the securing feature 310 translates from the retain position to an open position as a suitable connector 10 is inserted into the connection port 236. Then, when connector 10 is fully-seated the securing feature 310 is biased back to the retain position to secure the connector 10 in the connection port 236. The securing feature passageway 245 is arranged transversely to a longitudinal axis LA of the extender port 200, but other arrangements are possible. Other securing features may operate in a similar manner, but use an opening instead of a bore that receives the connector therethrough.

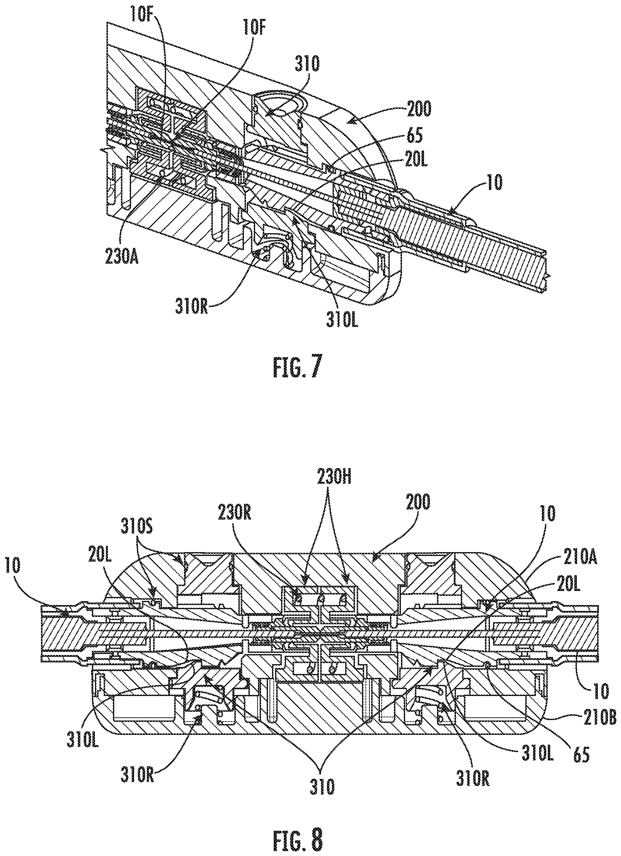

As shown in **FIG. 5****,** securing feature 310 comprises a locking feature 310L. Locking feature 310L cooperates with a portion of the connector 10 when it is fully-inserted into the connection port 236 for securing the same. Specifically, the connector housing 20 of connector 10 may have a cooperating geometry that engages the locking feature 310L of securing feature 310. In this embodiment, securing feature 310 comprise a bore 310B that is respectively aligned with the respective connector port passageway 233 as shown in **FIG. 5** when assembled. The bore 310B is sized for receiving a portion of connector 10 therethrough. **FIGS. 7-9** are longitudinal cross-sectional views of extender port 200 depicting the optical connection port 236 of the extender port 200 with a connector 10 retained therein.

As depicted in this embodiment, locking feature 310L is disposed within bore 310B. Specifically, locking feature 310L comprises a ramp in this embodiment. The ramp is integrally formed at a portion of the bore 310B with the ramp angling up when looking into the connection port 236. The ramp allows the connector 10 to push and translate the securing feature 310 downward against the securing feature resilient member 310R as the connector 10 is inserted in the connection port 236 as shown. Ramp may have any suitable geometry such as a retention surface such as a ledge at the backside or the ramp may lead to a flat portion before the retention surface. Once the locking feature 310L of the securing feature 310 is aligned with the cooperating geometry of the locking feature 20L of connector 10, then the securing feature 310 translates so that the locking feature 310L engages the locking feature 20L of connector 10 as shown in **FIGS. 7-9****.** Detailed views of the securing feature 310 of **FIG. 1** are shown in **FIGS. 10-12****.**

The sealing between the components of shell 210 may comprise a sealing element (not visible) disposed between the components. The sealing may comprise a groove in one portion of the shell that cooperates with a tongue on the other portion of the shell 210. Grooves may extend about the perimeter of sealing surface. Grooves may receive one or more appropriately sized O-rings or gaskets for weatherproofing extender port 200. The O-rings are suitably sized for creating a seal between the components of the shell 210. By way of example, suitable O-rings may be a compression O-ring for maintaining a weatherproof seal. Other embodiments may use an adhesive or suitable welding of the materials such as ultrasonic or induction welding with appropriate materials for sealing the extender port 200.

**FIG. 6** depicts a perspective view showing details of the second portion 210B of shell 210 of **FIG. 1****.** Second portion 210B of shell 210 comprises at least one pin 210P disposed within a securing member pocket 210SP. The pin 210P and the securing member pocket 210SP cooperate to align and seat the resilient member 310R between the second portion 210B of shell 210 and the securing feature 310 for biasing the securing feature 310 to a retain position.

In this embodiment, shell 210B also comprises a tongue 210T near an outer periphery that may cooperate with a groove 210G construction on the first portion 210A of the shell 210 for alignment and/or sealing of the device. The interface between components of the shell may have other structure or features for securing or sealing the components such as fasteners for securing the components of the shell or an adhesive, o-ring or gasket or weldable feature for sealing. Shells 210 may have any suitable shape, design or configuration as desired. Shells 210 may comprise at least one rib or support 210S, thereby providing crush support for the extender port 200 and resulting in a robust structure. Further, shells 210 may comprise more than two portions if desired. Likewise, multiple portions of the shell 210 may comprise connection ports 236.

Any of the extender port 200 disclosed herein may optionally be weatherproof by appropriately sealing seams of the shell 210 between components using any suitable means such as gaskets, O-rings, adhesive, sealant, welding, overmolding or the like. Moreover, the interface between the connection ports 236 and the dust cap or connector 10 may be sealed using appropriate geometry and/or a sealing element such as an O-ring or gasket 65 on the connector or dust cap. If the extender port 200 is intended for indoor applications, then the weatherproofing may not be required.

Extender port 200 may also comprise integrated mounting features. By way of explanation, shell 210 may have mounting features configured as passageways disposed on the lateral sides. Thus, the user may simply use a fastener such as a zip-tie threaded thru these lateral passageways for mounting the extender port 200 to a wall or pole as desired.

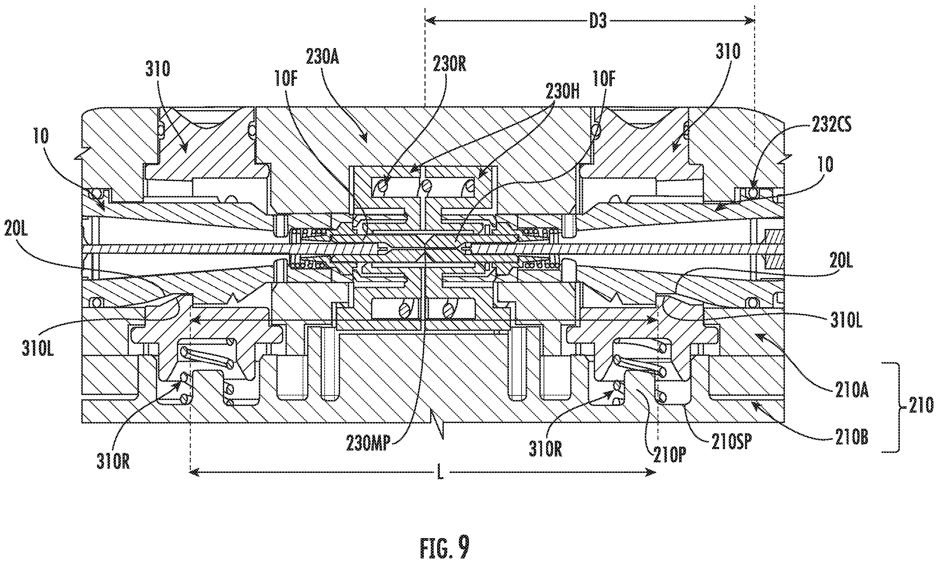

As shown in **FIG. 9****,** the connector mating plane 230MP between the ferrules 10F of connectors 10 is disposed within the cavity 216 extender port 200. Connectors 10 includes a locking feature 20L on the housing 20 for cooperating with a securing feature 310 of extender port 200. Additionally, the connection ports 236,236' comprise a suitable length L between locking features 310 associated with the connection ports 236,236' so that the connectors 10 may have the proper amount of "float" for suitable optical performance. Connector 10 may comprise at least one O-ring 65 for sealing with the connector port passageway 233 at a sealing surface 233SS when the connector 10 is fully inserted into the connection port 236. Illustratively, connection port 236 has connection port passageway sealing surface 233CS for the connector 10 disposed at a distance D3 from the mating plane 230MP of the connectors 10. Distance D3 is farther from the mating plane 230 MP than the locking feature 310L of securing feature 310. The tolerance stack-up of components between the locking features 310L in the disctance L should be managed to allow a suitable connector-to-connector interface with the mating ferrules.

**FIGS. 10-12** depict detailed perspective views of the securing feature 310 shown by the explanatory device of **FIG. 1****.** Locking feature 310L comprises a retention surface 310RS. In this embodiment, the back-side of the ramp of locking feature 310L forms a ledge that cooperates with complimentary geometry on the connector housing 20 of connector 10. However, retention surface 310RS may have different surfaces or edges that cooperate for securing connector 10 for creating the desired mechanical retention. For instance, the retention surface 310RS may be canted or have a vertical wall for tailoring the pull-out force for the connection port 236. However, other geometries are possible for the retention surface 310RS. Additionally, the connection port 236 has a sealing location at a connection port passageway sealing surface with the connector 10 that is located closer to the optical connector opening 238 at the outer surface 234 than the securing feature 310 or locking feature 310L.

Securing feature 310 may also comprise other features as best depicted in **FIGS. 10-12****.** For instance, securing feature 310 may include a sealing member 310S disposed above the connector port passageway 233 for keeping dirt, debris and the like out of portions of the extender port 200. Sealing member 310S is sized for the retention groove 310RG in the securing feature 310 and the securing feature passageway 245 for sealing.

Securing feature 310 may also comprises one or more guides 310G that cooperate with the shell 210 for keeping the bore 310B in the proper rotational orientation within the respective securing feature passageway 245 during translation. In this embodiment, two guides 310G are arranged about 180 degrees apart and guide the translation of the securing feature 310. Securing feature 310 may also comprise one or more keys 310K that cooperate with the shell 210 or connection port insert 230 for only allowing one assembly orientation into the shell 210 or connection port insert 230, thereby keeping the locking feature 310L in the proper position within the respective securing feature passageway 245 with respect to the connector insertion direction.

Securing feature 310 may also comprise a stop surface 310SS for inhibiting overtravel or the securing feature 310 from being removed from the extender port 200 when assembled. In this embodiment, the stop surface 310SS is disposed as the top surface of guides 310G. Securing feature 310 may also include a dimple 310G or other feature for inhibiting inadvertent activation/translation of the securing feature 310 or allowing a tactical feel for the user. Securing features 310 may also be a different color or have a marking indicia for identifying the port type.

As best shown in **FIGS. 10 and 11****,** locking feature 310L is configured as ramp 310RP that runs to a short flat portion, then to a ledge that reverts to a round cross-section for creating the retention surface 310RS for engaging and retaining the connector 10 once it is fully-inserted into the connector port passageway 233 of the connection port 236. Consequently, the securing feature 310 is capable of moving to an open position (OP) when inserting a suitable connector 10 into the connector port passageway 233 since the connector housing 20 engages the ramp 310RP pushing the securing feature downward during insertion.

The securing feature 310 translates from a retain position (RP) to an open position (OP) as a suitable connector 10 is inserted into the connection port 236. Once connector 10 is fully inserted into connector passageway 233, then the securing feature 310 automatically moves to the retain position (RP) since it is biased upwards to the retain position. This advantageously allows a plug and play connectivity of the connectors 10 with extender port 200 without having to turn a coupling nut or a bayonet like conventional devices. Thus, connections to the extender port may be made faster and in positions that may be awkward with relative ease.

Still other types of securing members 310 may operate in a similar manner for securing connector 10, but comprise more than one component such as an actuator 310A that cooperates with a securing member 310M such as disclosed herein with other embodiments. Additionally, the use of more than one component may allow other arrangements for the securing feature passageway 245 relative to a longitudinal axis LA of the device.

To make identification of the connection ports or easier for the user, a marking indicia may be used such as text or color-coding of extender port or marking the input tether (e.g. an orange or green polymer) or the like.

Any of the extender ports 200 may also have one or more dust caps (not shown) for protecting the connection port 236 from dust, dirt or debris entering the extender port or interfering with the optical performance. Thus, when the user wishes to make an optical connection to the extender port, the appropriate dust cap is removed and then connector 10 of cable assembly 100 may be inserted into the respective connection port 236 for making an optical connection to the extender port 200. Dust caps may use similar release and retain features as the connectors 10. By way of explanation, when securing feature 310 is pushed inward or down, the dust cap is released and may be removed.

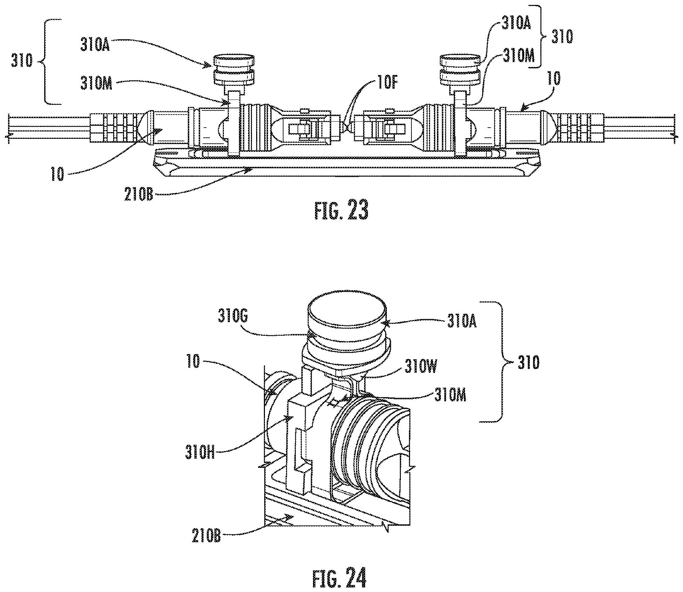

Other variations of extender ports 200 are possible according to the concepts disclosed. By way of example, Extender ports 200 of **FIGS. 13-17** **and** **18-24** are similar to extender port 200 of **FIG. 1****,** except they use other mechanisms with the securing feature 310, wherein Extender ports 200 of **FIGS. 18-24** are not covered by the scope of the appended set of claims. **FIGS. 13-17** depict another explanatory fiber optic extender port 200 according to the concepts disclosed. Extender port 200 of **FIGS. 13-17** is similar to extender port 200 of **FIG. 1****,** except it uses a single securing member 310M having opposing locking features 310L. Using two locking features 310L on a common datum of the securing member 310M of **FIG. 13** provides easier control of the length L between locking features 310L compared with the tolerance stack-up of multiple components Individual actuators 310A (i.e., two) for cooperating with securing member 310M for releasing and mating the connection ports 236. Like extender port 200 of **FIG. 1****,** resilient members 310R bias securing member 310M upwards to a retain position at each end for the respective connection ports 236, thereby providing a normally locked position for the connection port 236. To release the locking feature 310L of securing member 310M of **FIG. 13****,** either one of the actuator 310A may be pushed downward for translating one end of the securing member 310M downward and moving the locking feature 310L to a release position.

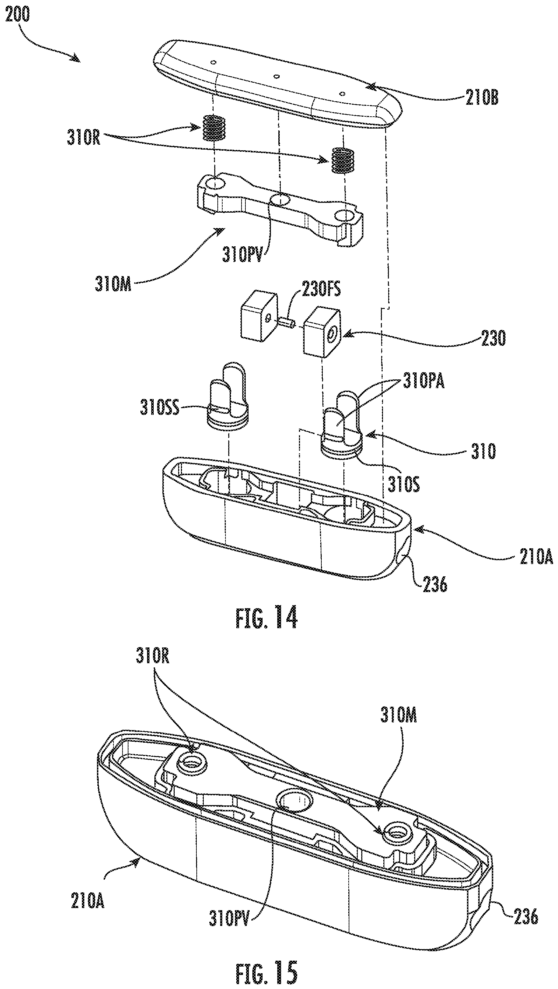

**FIGS. 13** **and** **14** depict partially exploded views of the extender port 200 showing details of the construction, and **FIG. 15** shows an assembled view with the second portion 210B removed. This extender port 200 has biased securing features that operates in a similar manner as the other extender ports disclosed. However, this extender port 200 uses a securing feature 310 with a common securing member 310M comprising two locking features 310L for avoiding the tolerance stack-up of multiple components in the device for helping preserve optical performance. With reference to **FIG. 13****,** the two locking features 310L on the common securing member 310M are positioned at the desired distance L to allow a suitable connector-to-connector interface between the mating ferrules; and the tolerances and ferrule travel of the connectors may be considered as well. Opposing locking features 310L are molded on a common securing member 310M as depicted in **FIGS. 13-16****.** Locking features 310L of the common securing member 310M may have suitable geometry for securing connectors such as described herein.

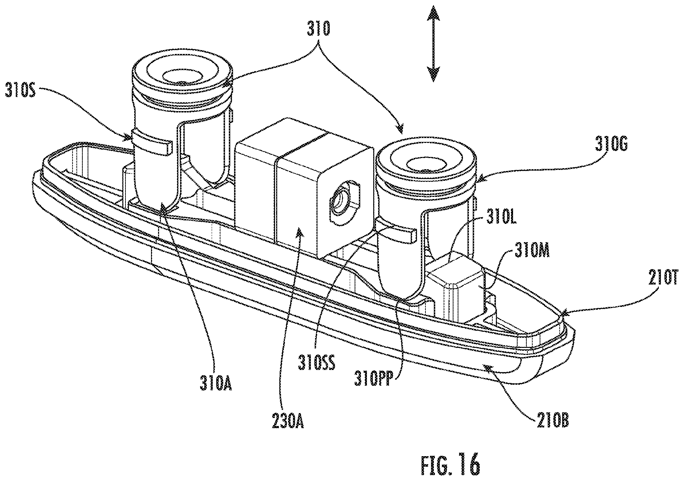

Actuator 310A cooperates with respective securing feature passageways 245 formed as a portion of the first portion 210A of shell 210 as discussed herein. Actuators 310A also comprise push arms 310PA that are spaced apart for allowing a portion of the connector 10 to pass therethrough for mating as best shown in **FIG. 16****.** When assembled, push arms 310PA contact portions of the securing member 310M adjacent to locking feature as shown and translating the actuator 310A downwards translates the locking feature 310L to a release position.

Like the extender port 200 of **FIG. 1****,** securing features 310 may translate in a vertical direction as represented by the arrows in **FIG. 16** for retaining and releasing connector 10 in extender port 200. As depicted, the resilient members 310R are disposed below the securing member 310M for biasing the ends of the securing member 310M (and the actuators 310A) upwards to a normally retained position (RP). Securing feature 310 further includes a locking feature 310L.

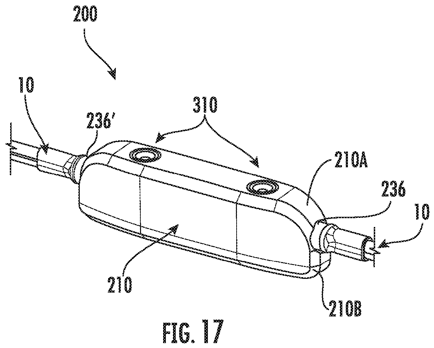

A simplified adapter assembly 230A is used in this embodiment that comprises a ferrule sleeve 230FS for precision alignment of mating ferrules between connectors 10 that is disposed within adapter housing 230H without a resilient member. **FIG. 17** depicts the extender port 200 fully-assembled.

Devices may have other constructions for the securing features 310 that use more than one component. Illustratively, **FIGS. 18-24** depict another extender port 200 not covered by the scope of the appended set of claims that comprises a connection port 236 as a portion of the shell 210 with securing features 310 comprising more than one component. This extender port is similar to the construction described, and the description of this device with the securing feature 310 comprising more than one component will describe differences in the designs for the sake of brevity, and other features are similar to those disclosed.

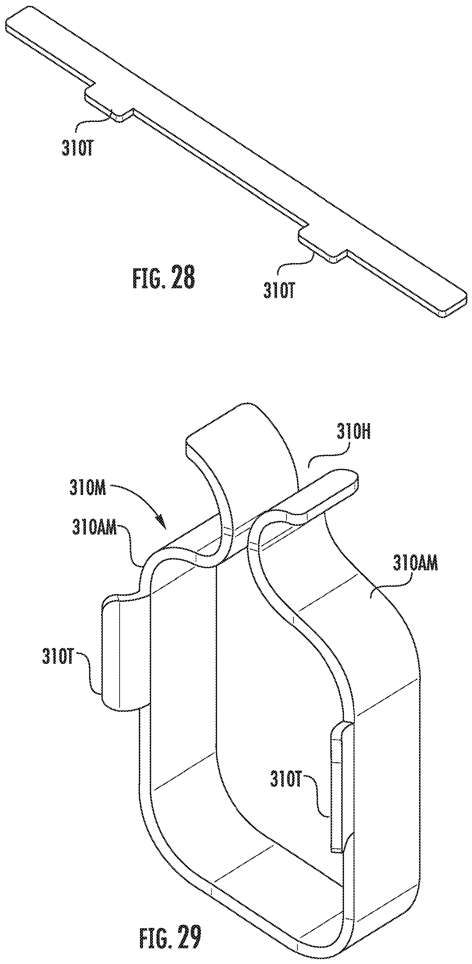

Extender port 200 of **FIGS. 18-24** uses securing features 310 comprising an actuator 310A and a securing feature member 310M. Specifically, securing feature member 310M comprises an opening may be elastically deformed by actuator 310A (or other structure) when pushed (or upon insertion of a suitable connector 10 into connection port 236) and the securing feature member 310M springs back to engage a suitable portion of connector 10 such as loking feature 20L of connector housing 20
when the actuator 310A is released or when connector 10 is fully-seated within the connection port 236 as will discussed in more detail. As best shown in **FIG. 29****,** the securing member 310M comprises a locking feature 310L formed by one or more arms 310AM.

**FIGS. 19-22** are partial assembled views with portions of a securing feature sub-assembly 310SA removed as discussed below for disclosing the construction and operation of the securing feature 310. As depicted in **FIG. 19****,** the securing member 310M may be placed into a housing formed by one or more housing portions 310HH for maintaining the proper orientation of the securing features within shell 210. The securing feature sub-assembly 310SA also allows for easier assembly of securing members 310M into the shell 210 of extender ports 200. In other words, the housing portions 310HH may have suitable geometry for keeping the securing members in the desired orientation. The right-side of **FIG. 19** depicts the securing feature sub-assembly 310SA assembled and placed into the second portion 210B of shell 210. For instance, the second portion 210B may have a pocket or other alignment feature for seating the securing feature sub-assembly 310SA. The left-side of **FIG. 19** depicts the securing member 310M and the actuator 310A without the housing portions 310HH to show the engagement with the locking features on the connector 10. Consequently, the actuators 310A are aligned and positioned with respective securing members 310M of the securing features.

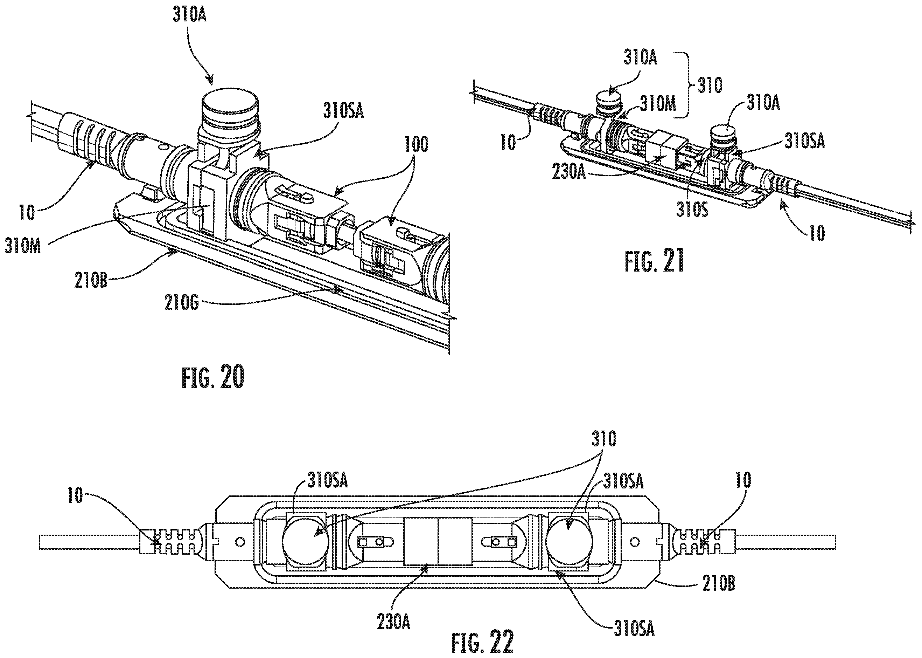

**FIG. 20** is a detailed perspective view showing the securing member 310M disposed within the components 310H of 310SA and the adapter assembly 230A removed to show the mating of complimentary ferrules 10F of connectors 10. Specifically, the arms of the securing member 310M engage a locking feature 20L (e.g., a groove) that is integrally-formed on the housing 20 of the connector 10. **FIG. 21** is a detailed perspective view similar to FIG. 20, but the adapter assembly 230A is shown.

Securing feature 310 comprises actuator 310A and securing member 310M. Securing member 310M comprises an opening between its arms 310AM that may be elastically deformed by actuator 310A when translated (i.e., pushed) or upon insertion of a suitable connector 10 into connection port 236 by spreading (i.e., translating) the arms of the securing member 310M outward. When the actuator 310A is released or the connector is fully-seated within the connection port 236 or input port 260, the arms 310AM of the securing member 310M springs back to engage a suitable portion of connector 10 such as locking feature 20L of connector housing 20 or move the actuator 310A to a normal position. The arms 310AM have an edge portion that act as a locking feature 310L for the suitable connector 10. By way of explanation, the edge portions of arms 310AM engage the locking feature 20L of the connector housing 20 for securing the connector 20. In order to release the connector 10 from the connection port 236, the arms 310AM and locking features 310L on the arms 310AM are translated outward.

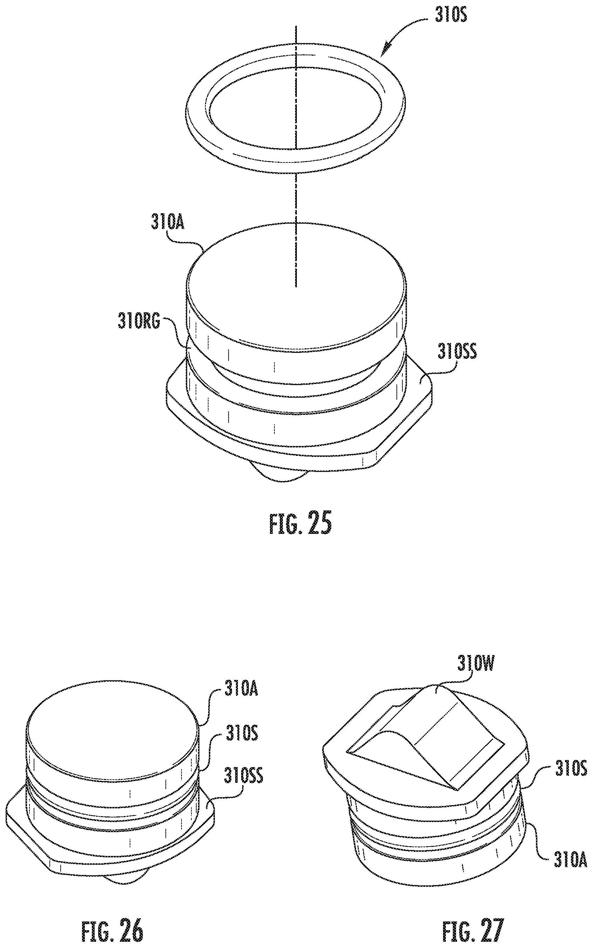

As best shown in **FIG. 27****,** actuator 310A comprises a wedge 310W that pushes into a head end 310H of securing member 310M, thereby elastically deflecting the arms 310AM of securing member 310M outward for releasing connector 10. The securing member 310M or actuators 310A of securing feature 310 may comprise a variety of different constructions. Likewise, the securing features 310 comprising more than one component may be biased by a securing feature resilient member 310RM if desired. For instance, securing feature resilient member 310RM may bias the actuator 310A toward a secure position. In other embodiments, the securing feature resilient member may bias the securing member 310M.

**FIGS. 25-27** are various perspective views of the actuator 310A of the securing feature 310 of the extender port 200 shown in **FIGS. 18-24****.** Actuator 310A may include a sealing member 310S disposed above the connector port passageway 233 for keeping dirt, debris and the like out of portions of the extender port 200. Sealing member 310S is sized for the retention groove 310RG in the actuator 310A and the securing feature passageway 245 for sealing. Actuator 310A may also be shaped to have one or more guides 310G that cooperate with the shell 210 or connection port insert 230 for keeping proper rotational orientation of the wedge 310W within the respective securing feature passageway 245 during translation. In this embodiment, the shape of the flange aids in the rotational orientation. Actuator 310A may also comprise a stop surface 310SS for inhibiting over-travel or the actuator 310A from being removed from the extender port 200 when assembled. Actuator 310A may also be a different color or have a marking indicia for identifying the port type. For instance, the actuator 310A may be colored red for connection ports 236 and the actuator 310A for the input connection port 260 may be colored black. Other color or marking indicia schemes may be used for passthrough ports, multi-fiber ports or ports for split signals.

Thus, the securing feature member 310M of securing feature 310 is suitable for retaining connector 10 in connection port 236 as discussed herein. Various different embodiments are possible for securing features 310 comprising more than one component for the devices disclosed.
**FIGS. 25-29** are various views of securing member 310M for explaining details of the design. **FIG. 28** is a perspective view of the securing member blank for forming the securing feature 310M depicted in **FIG. 29****.** Securing member 310M may be formed from any suitable material such as a spring steel and have a suitable geometry for retaining a connector 10. As depicted, securing member 310M comprises arms 310AM that define an opening (not numbered) therebetween along with a head end 310H formed at the ends of the arms 310AM. The opening (not numbered) between the arms 310AM is sized for cooperating with a suitable connector 10. Arms 310AM may comprise tabs 310T that are curved for aiding the engagement of the connector 10 with the securing member 310M upon insertion and allowing a smoother pushing and translation of the arms 310AM outward as connector 10 is inserted into connection port 236. Likewise, the head end 310H may also be formed with a suitable shape that cooperates with the actuator 310A. Like the other securing features 310, the securing feature 310 may comprises more than one component for translating from a retain position (RP) to an open position (OP) as a suitable connector 10 is inserted into the connection port 236. Once connector 10 is fully-inserted into connector passageway 233, then the securing feature 310 automatically moves to the retain position (RP) since the arms 310AM are biased to the retain position. This advantageously allows a push and play connectivity of the connectors 10 with extender port 200 without having to turn a coupling nut or a bayonet like conventional devices. Thus, connections to the extender port may be made faster and in positions that may be awkward with relative ease.

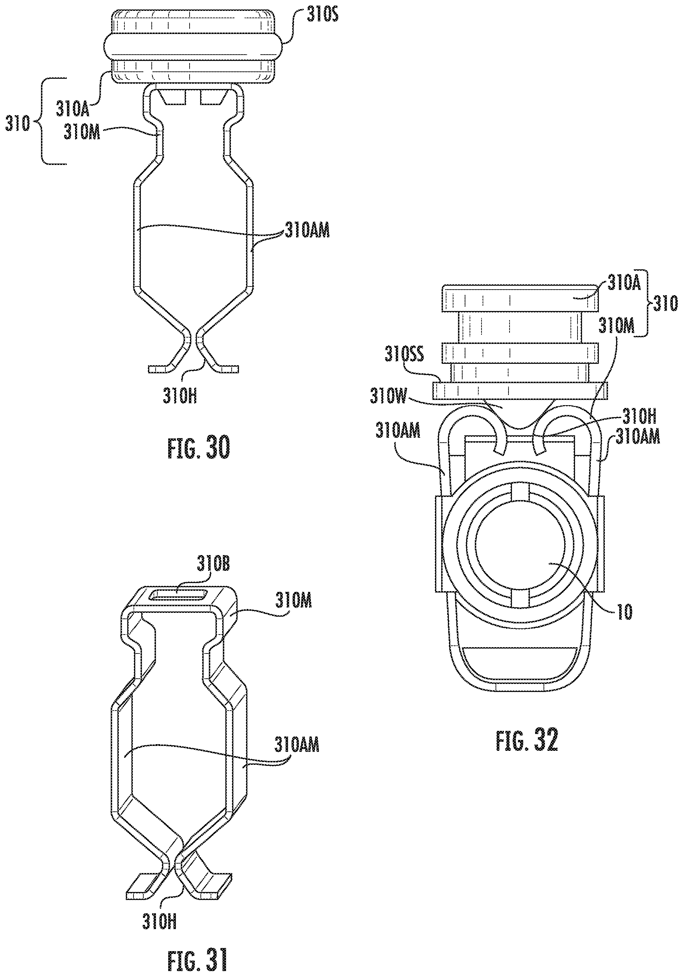

Securing features 310 comprising more than one component may have various other configurations for use with devices disclosed herein. **FIGS. 30 and 31** depict perspective views of another securing feature 310 comprising securing member 310M for use with an actuator 310A. In this embodiment, the securing member 310M is inverted so that the head end 310H cooperates with a portion of the extender port shell for translating the arms 310AM outward compared with other embodiments. More specifically, a portion of the extender port such as connector port insert of shell comprises a wedge for translating the arms 310AM outward when the actuator 310A translates downward.

**FIG. 32** is a front view of still another securing feature 310 comprising securing member 310M for use with an actuator 310A that provides a reduced height compared with other embodiments. This securing member 310M comprises arms 310AM that define an opening (not numbered) therebetween along with a head end 310H formed at the ends of the arms 310AM. Head end 310H of this securing member 310M has the ends curled in and downward and the actuator 310A positions the wedge 310W further upward into the acutator 310A footprint as shown in **FIG. 32** resulting in a construction that has a reduced height and allowing the device to reduce its height as well.

Still other variations of the concepts disclosed are possible. Securing features 310 may have any suitable orientation or construction for engaging connectors 10. Securing feature 310 may be arranged at an angle relative to the longitudinal axis LA of the connection port 236. By way of example, the securing feature 310 may comprises securing member 310M and actuator 310A disposed in a securing feature passageway 245 that is angled with respect to the longitudinal axis LA of the connection port 236. Likewise, connector 10 has a connector housing 20 with the locking feature 20L that is angled with respect to the longitudinal axis of the connector. Similar concepts may be used with as a portion of the shell or the connection port insert as well as a monolithic securing feature 310.

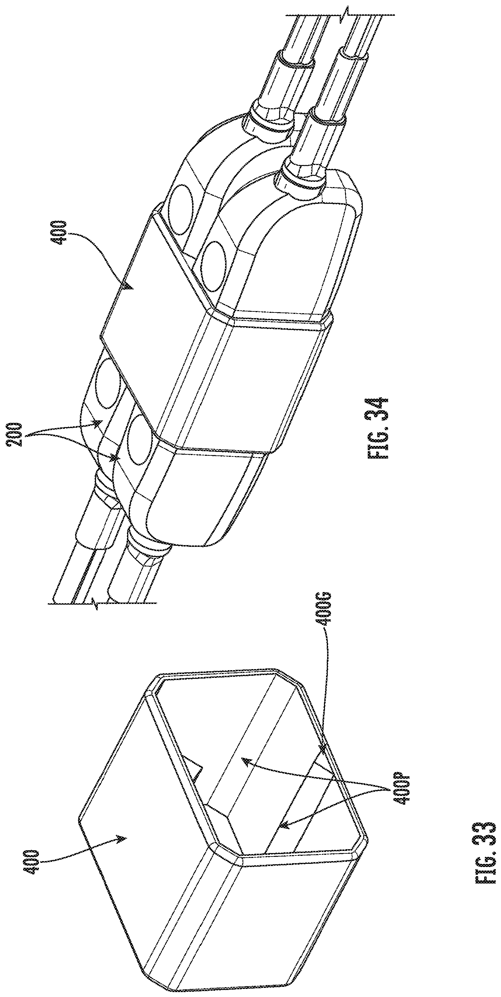

It may be advantageous to organize extender ports 200 in arrays. **FIG. 33** depicts an organizer 400 comprising a passageway 400P and one or more guides 400G. Organizer 400 is sized for receiving a plurality of extender ports 200 for providing organization for an array of devices as shown in **FIG. 34****.** Extender ports 200 are aligned with in the passageway 400P and have a friction fit with the organizer 400.

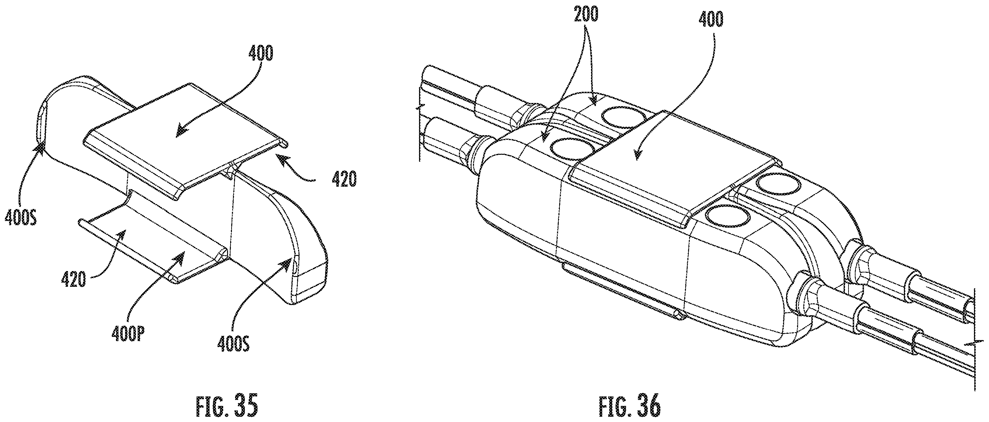

Organizers 400 can have a variety of shapes and configurations. **FIG. 35** depicts another organizer 400 comprising segregated passageways 400P disposed on opposite sides of a common wall. The passageways 400P have an open side 420 and the ends of the common wall have snap-fit features 400S for securing extender ports 200 to the organizer 400 as shown in **FIG. 36****.**

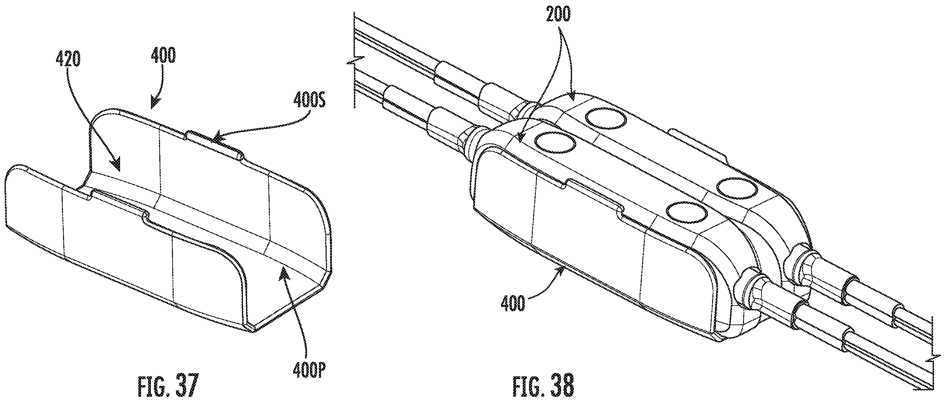

**FIG. 37** depicts yet another organizer 400 comprising passageway 400P with open side 420. Organizer 400 comprises snap-fit features 400S for securing extender ports 200 to the organizer 400 as shown in **FIG. 38****.**

The present application also discloses methods for making extender ports. One method of making an extender port comprises providing a shell 210 comprising a first connection port 236 having an optical connector opening 238 and a connection port passageway 233. The method includes assembling at least one securing feature so it is associated with a connection port passageway of the shell securing, and installing at least one securing feature resilient member for biasing a portion of the at least one securing feature. Other methods for making devices such as extender port 200 as disclosed herein are also contemplated.

Another method comprises providing a shell with a first connection port comprising an optical connector opening extending from an outer surface of the extender port into a cavity of the extender port and defining a first connection port passageway, and a second connection port comprising an optical connector opening extending from an outer surface of the extender port into a cavity of the extender port and defining a second connection port passageway, where the second connection port passageway is aligned with the first connection port passageway. The method includes assembling at least one securing feature so it is associated with a connection port passageway of the shell, and installing at least one securing feature resilient member for biasing a portion of the at least one securing feature.

The methods disclosed may further include steps or features as disclosed herein for making extender ports where the securing feature 310 may translate between an open position OP and a retain position RP. The method may include translating the securing feature 310 for moving the securing feature 310 to the open position OP and the securing feature 310 is biased to retain position RP.

Although the disclosure has been illustrated and described herein with reference to explanatory embodiments and specific examples thereof, it will be readily apparent to those of ordinary skill in the art that other embodiments and examples can perform similar functions and/or achieve like results. For instance, the connection port insert may be configured as individual sleeves that are inserted into a passageway of a device, thereby allowing the selection of different configurations of connector ports for a device to tailor the device to the desired external connector. Such embodiments are not part of the claimed invention. It will also be apparent to those skilled in the art that various modifications and variations can be made to the concepts disclosed without departing from the scope of the same. Thus, it is intended that the present application cover the modifications and variations provided they come within the scope of the appended claims.

## Claims

1. An extender port (200) for making an optical connection with an external fiber optic connector (10), comprising:
a shell (210);
a first connection port (236) disposed on the extender port (200) with the at least one connection port (236) comprising an optical connector opening (238) extending from an outer surface (234) of the extender port (200) into a cavity (216) of the extender port (200) and defining a connection port passageway (233);
at least one securing feature (310) associated with the connection port passageway (233), wherein the at least one securing feature (310) is capable of translating within the shell (210) for securing or releasing the external fiber optic connector (10), and
at least one securing feature resilient member (310RM) for biasing a portion of the at least one securing feature (310) to a retain position (RP),
**characterized in that** the extender port further comprises at least one securing feature passageway, wherein a portion of the at least one securing feature is disposed within a portion of the at least one securing feature passageway.

2. The extender port of claim 1, further comprising a tether cable having at least one optical fiber, the tether cable is attached to the extender port so that the at least one optical fiber is aligned with the at least one connection port (236).

3. The extender port of claim 1 or 2, further comprising a second connection port (236') disposed on the extender port (200), the second connection port (236') comprising an optical connector opening (238') extending from an outer surface (234) of the extender port (200) into the cavity (216) of the extender port (200) and defining a second connection port passageway (233'), the second connection port passageway (233') being aligned with the first connection port passageway (233).

4. The extender port of any of claims of 1-4, wherein the at least one securing feature (310) comprises a bore (310B) that is aligned with the at least one connection port passageway (233).

5. The extender port of any one of claims 1-5, wherein the at least one securing feature (310) translates from the retain position (RP) to an open position (OP) as a suitable fiber optic connector (10) is inserted into the at least one connection port (236).

6. The extender port of any one of claims 1-6, wherein the at least one securing feature (310) is capable of releasing the fiber optic connector (10) when translating within a portion of the at least one securing feature passageway (245).

7. The extender port of any one of claims 1-7, wherein the at least one securing feature (310) is capable of moving to the retain position (RP) automatically when a suitable fiber optic connector is fully-inserted into the at least one connection port passageway (233).

8. The extender port of any one of claims 1-8, wherein the at least one securing feature (310) comprises a locking feature (310L), wherein the locking feature (310L) cooperates with a portion of the fiber optic connector (10) when it is fully-inserted into the connection port (236) for securing the same.

9. The extender port of claim 8, wherein the locking feature (310L) comprises a ramp with a ledge.

10. The extender port of any one of claims 1-9, further comprising at least one adapter (230A) aligned with the first connection port (236).

11. A method of making an extender port (200) for making an optical connection with an external fiber optic connector (10), the method comprising:
providing a shell (210) comprising a first connection port (236) having an optical connector opening (238) and a connection port passageway (233), wherein the optical connector opening (238) extends from an outer surface (234) of the extender port (200) into a cavity (216) of the extender port (200) and defining a connection port passageway (233); and
assembling at least one securing feature (310) so it is associated with a connection port passageway (233) of the shell, wherein the at least one securing feature (310) is capable of translating within the shell (210) for securing or releasing the external fiber optic connector (10), wherein a portion of the at least one securing feature (310) is disposed within a portion of the at least one securing feature passageway (245); and
installing at least one securing feature resilient member (310RM) for biasing a portion of the at least one securing feature to a retain position (RP).

12. The method of claim 11, wherein the at least one securing feature (310) is capable of releasing the fiber optic connector (10) when translating within a portion of the at least one securing feature passageway (245).

13. The method of claims 11 or 12, wherein the at least one securing feature (310) is capable of moving to the retain position (RP) automatically when a suitable fiber optic connector is fully-inserted into the at least one connector port passageway (233).

14. The method of any one of claims 11-13, wherein the at least one securing feature (310) comprises a locking feature (310L), wherein the locking feature (310L) cooperates with a portion of the fiber optic connector (10) when it is fully-inserted into the connection port (236) for securing the same.

15. The method of any one of claims 11-14, wherein the locking feature (310L) comprises a ramp with a ledge.

## Patentansprüche

1. Verlängerungsanschluss (200) zum Herstellen einer optischen Verbindung mit einem externen faseroptischen Verbinder (10), der Folgendes aufweist:
ein Gehäuse (210);
einen ersten Verbindungsanschluss (236), der an dem Verlängerungsanschluss (200) angeordnet ist, wobei der zumindest eine Verbindungsanschluss (236) eine optische Verbinderöffnung (238) aufweist, die sich von einer Außenfläche (234) des Verlängerungsanschlusses (200) in einen Hohlraum (216) des Verlängerungsanschlusses (200) erstreckt und einen Verbindungsanschlussdurchgang (233) definiert;
zumindest ein Sicherungsmerkmal (310), das dem Verbindungsanschlussdurchgang (233) zugeordnet ist, wobei das zumindest eine Sicherungsmerkmal (310) innerhalb des Gehäuses (210) verschiebbar ist, um den externen faseroptischen Verbinder (10) zu sichern oder zu lösen, und
zumindest ein elastisches Sicherungsmerkmalelement (310RM) zum Vorspannen eines Abschnitts des zumindest einen Sicherungsmerkmals (310) in eine Halteposition (RP), **dadurch gekennzeichnet, dass** der Verlängerungsanschluss ferner zumindest einen Sicherheitsmerkmaldurchgang aufweist, wobei ein Abschnitt des zumindest einen Sicherungsmerkmals innerhalb eines Abschnitts des zumindest einen Sicherungsmerkmaldurchgangs angeordnet ist.

2. Verlängerungsanschluss nach Anspruch 1, ferner aufweisend ein Tetherkabel mit zumindest einer Lichtleitfaser, wobei das Tetherkabel an dem Verlängerungsanschluss so angebracht ist, dass die zumindest eine Lichtleitfaser mit dem zumindest einen Verbindungsanschluss (236) ausgerichtet ist.

3. Verlängerungsanschluss nach Anspruch 1 oder 2, ferner aufweisend einen zweiten Verbindungsanschluss (236'), der an dem Verlängerungsanschluss (200) angeordnet ist, wobei der zweite Verbindungsanschluss (236') eine optische Verbinderöffnung (238') aufweist, die sich von einer Außenfläche (234) des Verlängerungsanschlusses (200) in den Hohlraum (216) des Verlängerungsanschlusses (200) erstreckt und einen zweiten Verbindungsanschlussdurchgang (233') definiert, wobei der zweite Verbindungsanschlussdurchgang (233') mit dem ersten Verbindungsanschlussdurchgang (233) ausgerichtet ist.

4. Verlängerungsanschluss nach einem der Ansprüche 1 bis 4, wobei das zumindest eine Sicherungsmerkmal (310) eine Bohrung (310B) aufweist, die mit dem zumindest einen Verbindungsanschlussdurchgang (233) ausgerichtet ist.

5. Verlängerungsanschluss nach einem der Ansprüche 1 bis 5, wobei sich das zumindest eine Sicherungsmerkmal (310) von der Halteposition (RP) in eine offene Position (OP) verschiebt, wenn ein geeigneter faseroptischer Verbinder (10) in den zumindest einen Verbindungsanschluss (236) eingeführt wird.

6. Verlängerungsanschluss nach einem der Ansprüche 1 bis 6, wobei das zumindest eine Sicherungsmerkmal (310) in der Lage ist, bei Verschieben innerhalb eines Abschnitts des zumindest einen Sicherungsmerkmaldurchgangs (245) den faseroptischen Verbinder (10) zu lösen.

7. Verlängerungsanschluss nach einem der Ansprüche 1 bis 7, wobei das zumindest eine Sicherungsmerkmal (310) in der Lage ist, sich automatisch in die Halteposition (RP) zu bewegen, wenn ein geeigneter faseroptischer Verbinder vollständig in den zumindest einen Verbindungsanschlussdurchgang (233) eingeführt wird.

8. Verlängerungsanschluss nach einem der Ansprüche 1 bis 8, wobei das zumindest eine Sicherungsmerkmal (310) ein Verriegelungsmerkmal (310L) aufweist, wobei das Verriegelungsmerkmal (310L) mit einem Abschnitt des faseroptischen Verbinders (10) zusammenwirkt, wenn dieser vollständig in den Verbindungsanschluss (236) eingeführt wird, um selbigen zu sichern.

9. Verlängerungsanschluss nach Anspruch 8, wobei das Verriegelungsmerkmal (310L) eine Rampe mit einer Kante aufweist.

10. Verlängerungsanschluss nach einem der Ansprüche 1 bis 9, ferner aufweisend zumindest einen Adapter (230A), der mit dem ersten Verbindungsanschluss (236) ausgerichtet ist.

11. Verfahren zum Herstellen eines Verlängerungsanschlusses (200) zum Herstellen einer optischen Verbindung mit einem externen faseroptischen Verbinder (10), wobei das Verfahren umfasst:
Bereitstellen eines Gehäuses (210), das einen ersten Verbindungsanschluss (236) mit einer optischen Verbinderöffnung (238) und einem Verbindungsanschlussdurchgang (233) aufweist, wobei sich die optische Verbinderöffnung (238) von einer Außenfläche (234) des Verlängerungsanschlusses (200) in einen Hohlraum (216) des Verlängerungsanschlusses (200) erstreckt und einen Verbindungsanschlussdurchgang (233) definiert; und
Montieren zumindest eines Sicherungsmerkmals (310) so, dass es einem Verbindungsanschlussdurchgang (233) des Gehäuses zugeordnet ist, wobei das zumindest eine Sicherungsmerkmal (310) innerhalb des Gehäuses (210) verschiebbar ist, um den externen faseroptischen Verbinder (10) zu sichern oder zu lösen, wobei ein Abschnitt des zumindest einen Sicherungsmerkmals (310) innerhalb eines Abschnitts des zumindest einen Sicherungsmerkmaldurchgangs (245) angeordnet wird; und
Installieren zumindest eines elastischen Sicherungsmerkmalelements (310RM) zum Vorspannen eines Abschnitts des zumindest einen Sicherungsmerkmals in eine Halteposition (RP).

12. Verfahren nach Anspruch 11, wobei das zumindest eine Sicherungsmerkmal (310) in der Lage ist, bei Verschieben innerhalb eines Abschnitts des zumindest einen Sicherungsmerkmaldurchgangs (245) den faseroptischen Verbinder (10) zu lösen.

13. Verfahren nach den Ansprüchen 11 oder 12, wobei das zumindest eine Sicherungsmerkmal (310) in der Lage ist, sich automatisch in die Halteposition (RP) zu bewegen, wenn ein geeigneter faseroptischer Verbinder vollständig in den zumindest einen Verbindungsanschlussdurchgang (233) eingeführt wird.

14. Verfahren nach einem der Ansprüche 11 bis 13, wobei das zumindest eine Sicherungsmerkmal (310) ein Verriegelungsmerkmal (310L) aufweist, wobei das Verriegelungsmerkmal (310L) mit einem Abschnitt des faseroptischen Verbinders (10) zusammenwirkt, wenn dieser vollständig in den Verbindungsanschluss (236) eingeführt wird, um selbigen zu sichern.

15. Verfahren nach einem der Ansprüche 11 bis 14, wobei das Verriegelungsmerkmal (310L) eine Rampe mit einer Kante aufweist.

## Revendications

1. Port d'extension (200) pour établir une connexion optique avec un connecteur de fibre optique externe (10), comprenant :
une coque (210) ;
un premier port de connexion (236) disposé sur le port d'extension (200), l'au moins un port de connexion (236) comprenant une ouverture de connecteur optique (238) s'étendant depuis une surface extérieure (234) du port d'extension (200) dans une cavité (216) du port d'extension (200) et définissant un passage de port de connexion (233) ;
au moins une caractéristique de fixation (310) associée au passage de port de connexion (233), l'au moins une caractéristique de fixation (310) étant capable de translater à l'intérieur de la coque (210) pour fixer ou libérer le connecteur de fibre optique externe (10), et
au moins un élément élastique de caractéristique de fixation (310RM) pour solliciter une partie de l'au moins une caractéristique de fixation (310) vers une position de retenue (RP), le port d'extension étant **caractérisé en ce qu'**il comprend en outre au moins un passage de caractéristique de fixation, une partie de l'au moins une caractéristique de fixation étant disposée à l'intérieur d'une partie de l'au moins un passage de caractéristique de fixation.

2. Port d'extension selon la revendication 1, comprenant en outre un câble d'attache comportant au moins une fibre optique, le câble d'attache étant fixé au port d'extension de telle sorte que l'au moins une fibre optique soit alignée avec l'au moins un port de connexion (236).

3. Port d'extension selon la revendication 1 ou 2, comprenant en outre un deuxième port de connexion (236') disposé sur le port d'extension (200), le deuxième port de connexion (236') comprenant une ouverture de connecteur optique (238') s'étendant depuis une surface extérieure (234) du port d'extension (200) dans la cavité (216) du port d'extension (200) et définissant un deuxième passage de port de connexion (233'), le deuxième passage de port de connexion (233') étant aligné avec le premier passage de port de connexion (233).

4. Port d'extension selon l'une quelconque des revendications 1 à 4, dans lequel l'au moins une caractéristique de fixation (310) comprend un alésage (310B) qui est aligné avec l'au moins un passage de port de connexion (233).

5. Port d'extension selon l'une quelconque des revendications 1 à 5, dans lequel l'au moins une caractéristique de fixation (310) translate depuis la position de retenue (RP) vers une position ouverte (OP) lorsqu'un connecteur de fibre optique (10) approprié est inséré dans l'au moins un port de connexion (236).

6. Port d'extension selon l'une quelconque des revendications 1 à 6, dans lequel l'au moins une caractéristique de fixation (310) est capable de libérer le connecteur de fibre optique (10) lorsqu'il translate à l'intérieur d'une partie de l'au moins un passage de caractéristique de fixation (245).

7. Port d'extension selon l'une quelconque des revendications 1 à 7, dans lequel l'au moins une caractéristique de fixation (310) est capable de se déplacer automatiquement vers la position de retenue (RP) lorsqu'un connecteur de fibre optique approprié est entièrement inséré dans l'au moins un passage de port de connexion (233).

8. Port d'extension selon l'une quelconque des revendications 1 à 8, dans lequel l'au moins une caractéristique de fixation (310) comprend une caractéristique de verrouillage (310L), la caractéristique de verrouillage (310L) coopérant avec une partie du connecteur de fibre optique (10) lorsqu'il est entièrement inséré dans le port de connexion (236) pour le fixer.

9. Port d'extension selon la revendication 8, dans lequel la caractéristique de verrouillage (310L) comprend une rampe avec un rebord.

10. Port d'extension selon l'une quelconque des revendications 1 à 9, comprenant en outre au moins un adaptateur (230A) aligné avec le premier port de connexion (236).

11. Procédé de fabrication d'un port d'extension (200) pour établir une connexion optique avec un connecteur de fibre optique externe (10), le procédé comprenant les étapes consistant à :
fournir une coque (210) comprenant un premier port de connexion (236) comportant une ouverture de connecteur optique (238) et un passage de port de connexion (233), l'ouverture de connecteur optique (238) s'étendant depuis une surface extérieure (234) du port d'extension (200) dans une cavité (216) du port d'extension (200) et définissant un passage de port de connexion (233) ; et
assembler au moins une caractéristique de fixation (310) de manière qu'elle soit associée à un passage de port de connexion (233) de la coque, l'au moins une caractéristique de fixation (310) étant capable de translater à l'intérieur de la coque (210) pour fixer ou libérer le connecteur de fibre optique externe (10), une partie de l'au moins une caractéristique de fixation (310) étant disposée à l'intérieur d'une partie de l'au moins un passage de caractéristique de fixation (245) ; et
installer au moins un élément élastique de caractéristique de fixation (310RM) pour solliciter une partie de l'au moins une caractéristique de fixation vers une position de retenue (RP).

12. Procédé selon la revendication 11, dans lequel l'au moins une caractéristique de fixation (310) est capable de libérer le connecteur de fibre optique (10) lorsqu'il translate à l'intérieur d'une partie de l'au moins un passage de caractéristique de fixation (245).

13. Procédé selon la revendication 11 ou 12, dans lequel l'au moins une caractéristique de fixation (310) est capable de se déplacer automatiquement vers la position de retenue (RP) lorsqu'un connecteur de fibre optique approprié est entièrement inséré dans l'au moins un passage de port de connexion (233).

14. Procédé selon l'une quelconque des revendications 11 à 13, dans lequel l'au moins une caractéristique de fixation (310) comprend une caractéristique de verrouillage (310L), la caractéristique de verrouillage (310L) coopérant avec une partie du connecteur de fibre optique (10) lorsqu'il est entièrement inséré dans le port de connexion (236) pour le fixer.

15. Procédé selon l'une quelconque des revendications 11 à 14, dans lequel la caractéristique de verrouillage (310L) comprend une rampe avec un rebord.
